(19) Europäisches Patentamt
European Patent Office
Office européen des brevets

(11) EP 3 892 517 A1

(12) EUROPEAN PATENT APPLICATION
published in accordance with Art. 153(4) EPC

(43) Date of publication:
13.10.2021 Bulletin 2021/41

(51) Int Cl.:
B61F 5/52 (2006.01)     G01L 1/00 (2006.01)
B23K 31/00 (2006.01)    G06F 30/23 (2020.01)

(21) Application number: 19891822.9

(86) International application number:
PCT/JP2019/046555

(22) Date of filing: 28.11.2019

(87) International publication number:
WO 2020/116308 (11.06.2020 Gazette 2020/24)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 05.12.2018 JP 2018228320

(71) Applicant: NIPPON STEEL CORPORATION
Chiyoda-ku
Tokyo 100-8071 (JP)

(72) Inventors:
• MAKINO, Taizo
  Tokyo 100-8071 (JP)
• SHIMOKAWA, Yoshiyuki
  Tokyo 100-8071 (JP)
• TANIMINE, Teruhiko
  Tokyo 100-8071 (JP)
• KONDO, Osamu
  Tokyo 100-8071 (JP)
• KATO, Takanori
  Tokyo 100-8071 (JP)

(74) Representative: Zimmermann & Partner
Patentanwälte mbB
Postfach 330 920
80069 München (DE)

(54) STRESS ASSESSING METHOD FOR AS-WELDED PART OF RAILWAY VEHICLE BOGIE FRAME

(57) A method according to the present invention includes: a first process of building a finite element model using a solid model of a bogie frame that includes a finished weld part resulting from finishing an as-welded part such that the weld toe becomes a smooth, non-angular profile; a second process of executing finite element analysis employing the finite element model built in the first process so at to compute stress arising at the weld toe of the finished weld part; a third process of employing the stress computed in the second process and a pre-measured fatigue notch factor or a pre-measured stress concentration factor of the weld toe of the finished weld part, computing a nominal stress of the finished weld part, and taking this as a nominal stress of the as-welded part; and a fourth process of employing the nominal stress of the as-welded part obtained in the third process and a pre-measured fatigue notch factor of the weld toe of the as-welded part, and computing stress arising at the weld toe of the as-welded part.

FIG.1

START

PREPARATION PROCESS:
· MEASURE FATIGUE NOTCH FACTOR OF WELD TOE OF AS-WELDED PART
· MEASURE FATIGUE NOTCH FACTOR OR STRESS CONCENTRATION FACTOR OF WELD TOE OF FINISHED WELD PART — S0

FIRST PROCESS:
BUILD FINITE ELEMENT MODEL OF BOGIE FRAME INCLUDING FINISHED WELD PART — S1

SECOND PROCESS:
EXECUTE FINITE ELEMENT ANALYSIS AND COMPUTE STRESS ARISING IN WELD TOE OF FINISHED WELD PART — S2

THIRD PROCESS:
EMPLOY STRESS COMPUTED IN SECOND PROCESS AND FATIGUE NOTCH FACTOR OR STRESS CONCENTRATION FACTOR OF WELD TOE OF FINISHED WELD PART, AND COMPUTE NOMINAL STRESS OF AS-WELDED PART — S3

FOURTH PROCESS:
EMPLOY NOMINAL STRESS COMPUTED IN THIRD PROCESS AND FATIGUE NOTCH FACTOR OF WELD TOE OF AS-WELDED PART, AND COMPUTE STRESS ARISING IN WELD TOE OF AS-WELDED WELD PART — S4

CONTOUR DISPLAY GENERATION PROCESS:
GENERATE CONTOUR DISPLAY IN WHICH VALUES OF SAFETY FACTOR OF WELD TOE OF FINISHED WELD PART ARE REPRESENTED BY COLOR OR GRAYSCALE — S5

END

EP 3 892 517 A1

# Description

Technical Field

The present invention relates to a method for evaluating with good precision stress arising in weld toes of as-welded parts formed between members configuring bogie frames for railway vehicles.

Background Art

Railway vehicles are configured by a vehicle body and a bogie to support the vehicle body. The bogie is configured by a bogie frame and axles attached to the bogie frame. The bogie frame is connected to the vehicle body through air springs.

Generally, such bogie frames for railway vehicles are manufactured by the following series of manufacturing processes (see, for example, Patent Document 1).

First, members (steel members) are prepared by processing into predetermined shapes. Next, the thus prepared members are combined, and the members joined together to form the bogie frame using gas shield arc welding (for example MAG welding).

Next, a grinder is used to finish the surface profile of the weld parts formed between the members at locations where high levels of stress may be expected to arise in the weld parts, such as at weld toes (the visible boundaries between member and weld part). Next, the bogie frame is subjected to an annealing process to remove residual stress. The bogie frame is then subjected to shot blasting and machining, and small additional components such as tube seats are welded on before painting the bogie frame.

Bogie frames are manufactured by a series of manufacturing processes such as described above.

Note that the process of finishing the weld part with a grinder may be omitted in cases in which the stress arising at the weld toe of a weld part prior to finishing does not exceed a maximum permitted stress value. In other words, as-welded parts formed between members configuring the bogie frame (weld parts not yet subjected to further processing) may sometimes be left as-is, without finishing. Omitting such finishing enables a commensurate increase in the manufacturing efficiency of the bogie frame. A method capable of evaluating with good precision stress arising at a weld toe of an as-welded part prior to finishing the as-welded part is therefore desired.

The bogie frame is unable to be attached to a fatigue tester at the bogie frame design stage, since the bogie frame does not yet physically exist. Direct measurement of stress arising at the weld toe of an as-welded part in the bogie frame is accordingly difficult. One conceivable method for computing the stress arising at the weld toe of an as-welded part would be to build a finite element model of the bogie frame and then perform finite element analysis using this finite element model.

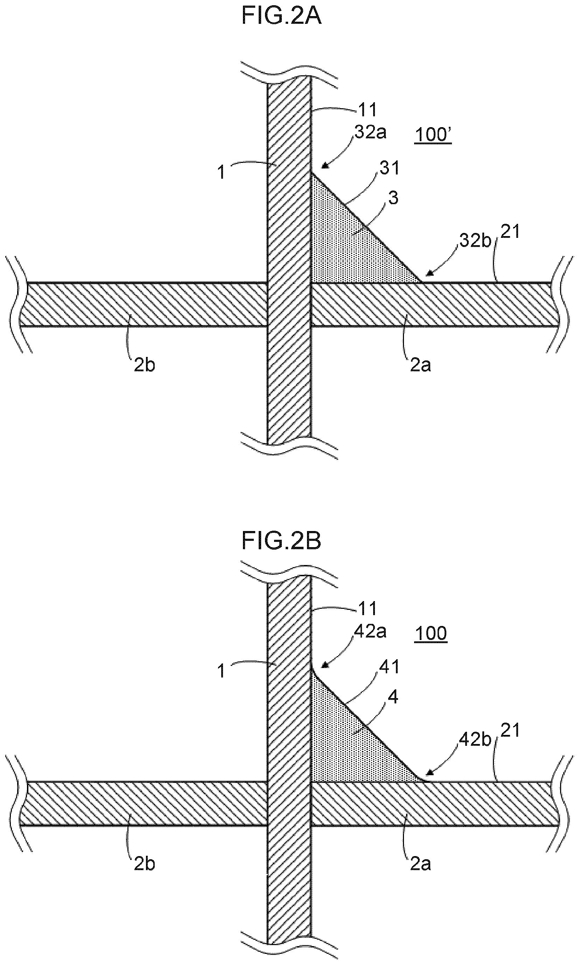

For example, in cases in which an as-welded part is formed between members configuring a cruciform welded joint, as illustrated in Fig. 2A, a conceivable approach would be to model the cross-section of an as-welded part 3 as a triangular profile in such a finite element model. In such cases, weld toes 32a, 32b of the as-welded part 3 have angular profiles (profiles including a geometrical singularity (angle point) where a tangent is not able to be set). Namely, the weld toe 32a is a portion where an edge 11 of a member 1 and an edge 31 of the as-welded part 3 intersect. However, since the straight edge 11 intersects with the straight edge 31 with a fold-line shape, this intersection point configures an angle point. Similar also applies in the case of the weld toe 32b.

When employing a finite element model in which the as-welded part has been modeled with weld toes having angular profiles as described above, even if a fine mesh is set in the finite element model, there is still an issue of being unable to compute with good precision the stress arising at the weld toes due to the computation results being heavily dependent on the mesh size.

Moreover, the cross-sections of as-welded parts of actual bogie frames are more complex than a simple triangular profile such as that described above. There is also variation between individual as-welded parts. Accordingly, in order to model an as-welded part accurately, there is still a need, for example, to individually measure the cross-section external profile of each as-welded part. This approach is impractical since it would require a large amount of effort.

Patent Document 2 discloses a fatigue life evaluation system to compute stress in respective parts of a structural element using a finite element method employing a shell model of the structural element. Fatigue life is evaluated according to local shape at locations of stress concentration based on the computed stress, on a stress concentration rate that was previously saved, and on a fatigue life evaluation line graph.

Patent Document 3 discloses a strength evaluation method for a vehicle bogie frame. The bogie frame strength evaluation method includes a process of building a FEM model for the bogie frame, a process of computing combined stress at nodes of the FEM model, and a process of performing a strength evaluation by generating a safety factor distribution diagram based on the combined stress.

Patent Documents

Patent Document 1: Japanese Patent Application Laid-Open (JP-A) No. 2016-68593
Patent Document 2: JP-A No. 2003-149091
Patent Document 3: JP-A No. 2005-190242

SUMMARY OF INVENTION

Technical Problem

However, the fatigue life evaluation system of Patent Document 2 employs a shell model. The cross-section of an as-welded part described above accordingly needs to be modeled as a simple cross shape. This means that not only are more complex individual shapes out of the question, but even simple triangular shapes are not reproducible therewith. Shell models are therefore clearly inferior to solid models in terms of stress analysis precision.

Although the bogie frame strength evaluation method of Patent Document 3 employs a solid model, such an approach needs a model for an as-welded part to be built with the assumption that the weld toe is an angle point and needs a model for a grinder finish to be built with the assumption that the weld toe has a rounded, non-angular profile, before then determining whether or not to have an as-welded part or a grinder finished weld part from a safety factor in the respective models. Such an approach needs a lot of time and effort in the design process.

In consideration of the existing issues described above, an object of the present invention is to provide a method, which is capable of evaluating with good precision stress arising at a weld toe of an as-welded part formed between members configuring a bogie frame of a railway vehicle by accurately reflecting the cross-section profile of the weld part, and that also enables omission of a process of performing finite element analysis using a model in which an as-welded part is modeled with a weld toe simulated by an angle point.

Solution to Problem

The present inventors carried out careful investigations to address the above issues, resulting in the following findings (a) to (g).

(a) When building a finite element model, the cross-section profile of a weld part, such as a fillet weld, can be reproduced accurately by selecting three-dimensional solid elements and employing a model (hereafter "solid model") in which an entire bogie frame has been divided into these elements. Accordingly, the accuracy of stress analysis can be improved by employing a solid model compared to cases in which a shell model is employed.

(b) Precise computation of the stress arising at the weld toe of the finished weld part is enabled by executing finite element analysis using a finite element model of a bogie frame including a weld part (referred to hereafter as the "finished weld part") resulting from finishing an as-welded part such that the weld toe becomes a smooth, non-angular profile (a profile configured by points where a tangent can be set).

(c) The nominal stress arising in an as-welded part and the nominal stress arising in a finished weld part resulting from finishing the as-welded part are equivalent to each other.

(d) A fatigue notch factor of the weld toe of the as-welded part, and a fatigue notch factor or stress concentration factor of the weld toe of the finished weld part, can each be derived experimentally using test pieces. This fatigue notch factor does not fluctuate greatly even when the cross-section external profile of the as-welded part is a complex profile.

(e) The stress arising at the weld toe of the finished weld part is accordingly computed using finite element analysis, and the nominal stress of the finished weld part is computed using this stress, together with the fatigue notch factor or the stress concentration factor of the weld toe of the finished weld part. The nominal stress of the finished weld part is equivalent to the nominal stress of the as-welded part. Namely, the nominal stress of the as-welded part is computable. The stress arising at the weld toe of the as-welded part is computable using the nominal stress of the as-welded part and the fatigue notch factor of the weld toe of the as-welded part.

(f) Employing the technique described in (d) enables omission of a process of finite element analysis using a model of the as-welded part in which the weld toe is simulated in the design process by an angle point.

(g) Applying the techniques described in (a) to (f) to an as-welded part formed between members configuring a bogie frame of a railway vehicle enables the stress arising at the weld toe of the as-welded part formed between members configuring the bogie frame of the railway vehicle to be evaluated with good precision by accurately reflecting the cross-section profile of the weld part. This moreover enables the omission of a process of finite element analysis using a model in which the as-welded part welded weld has a weld toe simulated by an angle point.

The present invention has been completed based on the above findings of the inventors.

Namely, in order to address the above problem, the present invention provides a railway vehicle bogie frame as-welded part stress evaluation method that is a method to evaluate stress arising at a weld toe of an as-welded part formed between members configuring a bogie frame of a railway vehicle, and that includes the following first to fourth processes.

(1) First Process: building a finite element model using a solid model of the bogie frame that includes a finished weld part resulting from finishing the as-welded part such that the weld toe becomes a smooth, non-angular profile.

(2) Second Process: executing finite element analysis employing the finite element model built in the first process so at to compute stress arising at the weld toe of the finished weld part.

(3) Third Process: employing the stress computed in the second process and a pre-measured fatigue notch factor or a pre-measured stress concentration factor of the weld toe of the finished weld part, computing a nominal stress of the finished weld part, and taking the nominal stress of the finished weld part as a nominal stress of the as-welded part.

(4) Fourth Process: employing the nominal stress of the as-welded part obtained in the third process and a pre-measured fatigue notch factor of the weld toe of the as-welded part, and computing stress arising at the weld toe of the as-welded part.

According to the present invention, in the first process a finite element model is built using a solid model of the bogie frame that includes the finished weld part. In the second process, the finite element model is employed to execute finite element analysis, so as to enable the stress arising at the weld toe to be computed with good precision due to employing a model that faithfully reproduces the shape of the weld toe of the finished weld part. Executing the third process and the fourth process enables the stress arising at the weld toe of the as-welded part to be computed and evaluated with good precision from the stress computed in the second process.

As described above, according to the present invention, employing a solid model that is capable of reproducing the shape of the weld toe more faithfully than the shell model of Patent Document 2 enables the stress arising at the weld toe of the as-welded part to be evaluated with good precision by accurately reflecting the cross-section profile of the weld part.

Moreover, according to the present invention, there is no need to directly model the as-welded part, which presents difficulty in modeling due to the issue of dependency of the solution on the mesh size. Namely, the present invention enables omission of a process in the design process of performing finite element analysis using a model in which the as-welded part has a weld toe simulated by an angle point, whereas such a process is required by the technology of Patent Document 3.

Note that in the present invention, "the weld toe becomes a smooth, non-angular profile" refers to the weld toe becoming a profile configured by points where a tangent can be set in cross-section of the finished weld part.

Preferably, in a case in which the fatigue notch factor of the weld toe of the finished weld part is employed in the third process, the fatigue notch factor is measured by executing fatigue testing using a test piece provided with a weld part corresponding to the finished weld part; in a case in which the stress concentration factor of the weld toe of the finished weld part is employed in the third process, the stress concentration factor is measured by executing static load testing using a test piece provided with a weld part corresponding to the finished weld part. Preferably, the fatigue notch factor of the weld toe of the as-welded part employed in the fourth process is measured by executing fatigue testing using a test piece provided with a weld part corresponding to the as-welded part.

In the preferable configuration described above, the "test piece provided with a weld part corresponding to the as-welded part" refers to a test piece provided with a weld part formed under equivalent conditions to those when forming an as-welded part on an actual bogie frame, without finishing (this is referred to hereafter as the "first test piece" as appropriate). Specifically, the weld part provided to the first test piece is formed using the same welding method, welding materials, welding current, and the like as those employed when forming an as-welded part on an actual bogie frame. Moreover, the materials employed for the members that are joined at the weld part provided to the first test piece are the same as the materials employed for the members joined by the as-welded part on an actual bogie frame. Furthermore, the form of welded joint configured by the weld part provided to the first test piece and by the members joined together by this weld part is the same as the form of the welded joint configured by the as-welded part on an actual bogie frame and by the members joined together by this as-welded part.

Moreover, in the preferable configuration described above, the "test piece provided with a weld part corresponding to the finished weld part" refers to a test piece including a weld part that has been formed under equivalent welding conditions to those when forming the as-welded part on an actual bogie frame, and that has been finished under equivalent conditions to those when finishing the finished weld part on an actual bogie frame (this is referred to hereafter as the "second test piece" as appropriate). Specifically, for example, in a case in which the finished weld part on an actual bogie frame is formed between members configuring a cruciform welded joint, and the weld toe of the finished weld part has a circular arc shape that is concave on the outside of the cross-section external profile with a predetermined radius of curvature, the weld part provided to the second test piece is also finished to a circular arc shape having the same radius of curvature.

In the present invention, in a case in which the as-welded part is formed between members configuring a cruciform welded joint, a T-shaped welded joint, or an angle joint, preferably the weld toe of the finished weld part has a circular arc shape that is concave on the outside of the cross-section external profile of the finished weld part.

The preferable method described above enables the weld toe of the finished weld part to be easily formed with a smooth, non-angular profile.

$\sigma_1$ is the stress arising at the weld toe of the finished weld part computed in the second process S2, $\sigma_2$ is the stress arising at the weld toe of the as-welded part computed in the fourth process S4, $\sigma_g$ is the permitted stress of the weld toe of the finished weld part, and

$\sigma_a$ is the permitted stress of the weld toe of the as-welded part. In such cases, the findings of the present inventors indicate a possible example of $\sigma_2 / \sigma_1$ = 1.3 and $\sigma_a / \sigma_g$ = 0.6.

In the above case, a safety factor $Z_g$ can be expressed by the following Equation (1), wherein $Z_g$ is a safety factor of the weld toe of the finished weld part (a safety factor relating to the permitted stress of the weld toe of the finished weld part). Moreover, a safety factor $Z_a$ can be expressed by the following Equation (2), wherein $Z_a$ is a safety factor of the weld toe of the as-welded part (a safety factor relating to the permitted stress of the weld toe of the as-welded part).

$$Z_g = \sigma_g / \sigma_1 \qquad (1)$$

$$Z_a = \sigma_a / \sigma_2 \qquad (2)$$

Equation (3) follows from Equation (1) and Equation (2).

$$Z_a = Z_g \cdot (\sigma_a / \sigma_g) / (\sigma_2 / \sigma_1) \qquad (3)$$

For example, in a case in which the safety factor $Z_g$ of the weld toe of the finished weld part is 2, and $\sigma_a / \sigma_g$ = 0.6 and $\sigma_2 / \sigma_1$ = 1.3 as in above example, according to Equation (3) the safety factor $Z_a$ of the weld toe of the as-welded part will be 0.92. Namely, the as-welded part is thought to need finishing due to the safety factor $Z_a$ being less than 1.0.

On the other hand, in a case in which the safety factor $Z_g$ of the weld toe of the finished weld part is 2.5, and $\sigma_a / \sigma_g$ = 0.6 and $\sigma_2 / \sigma_1$ = 1.3 as in above example, according to Equation (3) the safety factor $Z_a$ of the weld toe of the as-welded part will be 1.15. Namely, the as-welded part is thought not to need finishing since the safety factor $Z_a$ is not less than 1.0.

As described above, a safety factor $Z_a$ of 1.0 for the weld toe of the as-welded part is the branch point for whether or not finishing is needed for the as-welded part. If the safety factor $Z_g$ of the weld toe of the finished weld part is taken as a threshold safety factor $Z_{g, th}$ to determine the need for finishing, the following Equation (4) is derived from Equation (3).

$$Z_{g, th} = (\sigma_2 / \sigma_1) / (\sigma_a / \sigma_g) \qquad (4)$$

Accordingly, in a case in which a contour display is generated in which values of the safety factor $Z_g$ of the weld toe of the finished weld part (values of the safety factor $Z_g$ as computed using Equation (1)) are represented using color or grayscale, the value of a threshold safety factor $Z_{g, th}$ as expressed by Equation (4) may be employed as a color or grayscale boundary. The color or grayscale of the contour display may be made to differ between cases in which the value of the safety factor $Z_g$ as computed using Equation (1) is not less than the threshold safety factor $Z_{g, th}$ as expressed by Equation (4), and cases in which the value of the safety factor $Z_g$ is less than the threshold safety factor. Accordingly, whether or not there is a need to finish the as-welded part can be easily evaluated simply by looking at the generated contour display.

Namely, the present invention preferably further includes a contour display generation process of generating a contour display in which values of a safety factor $Z_g$ of the weld toe of the finished weld part as expressed by above Equation (1) are represented using color or grayscale, wherein $\sigma_1$ is a stress arising at the weld toe of the finished weld part computed in the second process, $\sigma_2$ is a stress arising at the weld toe of the as-welded part computed in the fourth process S4, $\sigma_g$ is a permitted stress of the weld toe of the finished weld part, and $\sigma_a$ is a permitted stress of the weld toe of the as-welded part. Preferably, in the contour display generation process, Equation (4) is used to derive a threshold safety factor $Z_{g, th}$ for values of the safety factor $Z_g$ with 1 used to represent a safety factor $Z_a$ of the weld toe of the as-welded part as expressed by Equation (3), and a contour display is generated using a value of the threshold safety factor $Z_{g, th}$ obtained by Equation (4) as a color or grayscale boundary.

According to the preferable method described above, whether or not there is a need to finish the as-welded part can be easily evaluated simply by looking at the contour display thus generated. As described above, in Patent Document 3, to determine whether or not finishing is needed, there is a need to look at a contour display obtained by analyzing two models of the as-welded part, i.e. before finishing and after finishing. The present invention however enables determination as to whether or not finishing is needed to be made by analyzing a single model of the as-welded part after finishing.

Advantageous Effects of Invention

The present invention enables stress arising at a weld toe of an as-welded part formed between members configuring a bogie frame of a railway vehicle to be evaluated with good precision by accurately reflecting the cross-section profile of the weld part. The present invention moreover also enables omission of a process of finite element analysis using a model in which the as-welded part has a weld toe simulated by an angle point.

BRIEF DESCRIPTION OF DRAWINGS

Fig. 1 is a flowchart to explain a stress evaluation method for an as-welded part of a railway vehicle bogie frame according to an exemplary embodiment of the present invention.

Fig. 2A is two-dimensional schematic diagrams illustrating examples of finite element models (solid models) of the vicinity of a weld part in finite element models of a bogie frame employed in stress evaluation methods according to a comparative example.

Fig. 2B is two-dimensional schematic diagrams illustrating examples of finite element models (solid models) of the vicinity of a weld part in finite element models of a bogie frame employed in stress evaluation methods according to an exemplary embodiment of the present invention.

Fig. 3A is two-dimensional schematic diagrams illustrating additional examples of finite element models (solid models) of the vicinity of a weld part in finite element models of a bogie frame employed in stress evaluation methods according to a comparative example.

Fig. 3B is two-dimensional schematic diagrams illustrating additional examples of finite element models (solid models) of the vicinity of a weld part in finite element models of a bogie frame employed in stress evaluation methods according to an exemplary embodiment of the present invention.

Fig. 4A is schematic diagrams illustrating an example of a first test piece provided with a weld part corresponding to an as-welded part of an actual bogie frame.

Fig. 4B are schematic diagrams illustrating an example of a first test piece provided with a weld part corresponding to an as-welded part of an actual bogie frame.

Fig. 5 is a diagram illustrating an example of a contour display generated in a contour display generation process S5 of Fig. 1.

## DESCRIPTION OF EMBODIMENTS

Explanation follows regarding an exemplary embodiment of the present invention, with reference to the accompanying drawings where appropriate.

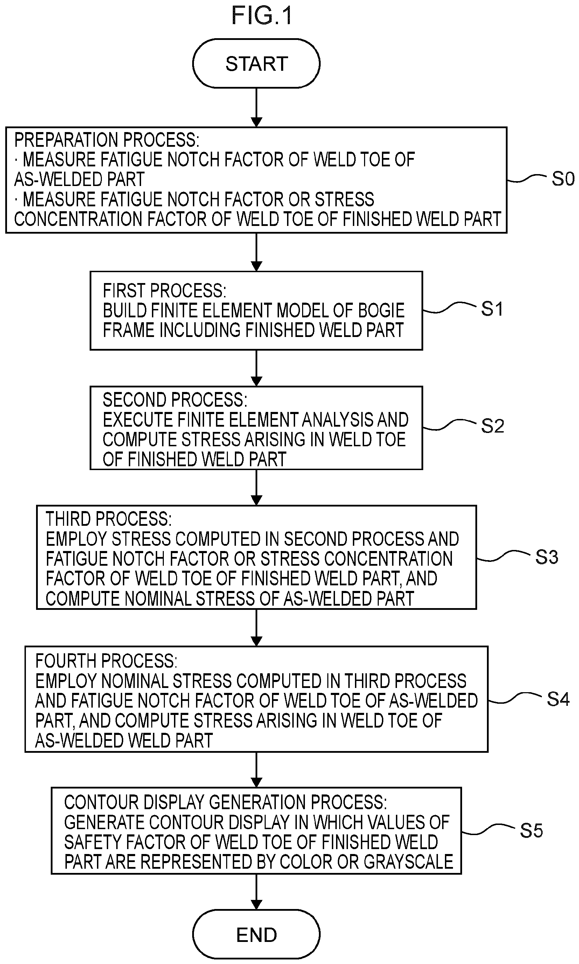

Fig. 1 is a flowchart to explain processes of a stress evaluation method for an as-welded part of a railway vehicle bogie frame (referred to hereafter as simply the "stress evaluation method") according to an exemplary embodiment of the present invention.

As illustrated in Fig. 1, the stress evaluation method according to the present exemplary embodiment includes a first process S1, a second process S2, a third process S3, and a fourth process S4. The stress evaluation method of the present exemplary embodiment is preferably a method that also includes a preparation process S0 of pre-measuring a fatigue notch factor or stress concentration factor of a weld toe of the finished weld part for employing in the third process S3, and of pre-measuring a fatigue notch factor of the weld toe of the as-welded part for employing in the fourth process S4. The stress evaluation method according to the present exemplary embodiment is preferably a method that also includes a contour display generation process S5 of generating a contour display in which values of a safety factor calculated using the stress arising at the weld toe of the finished weld part as computed in the second process S2 are represented by color or grayscale.

Explanation follows regarding each of the processes S1 to S4 in sequence from the first process S1, followed by explanation regarding the preparation process S0, and finally explanation regarding the contour display generation process S5.

First Process S1

In the first process S1, a finite element model is built using a solid model of a bogie frame including a finished weld part resulting from finishing an as-welded part such that a weld toe of the as-welded part becomes a smooth, non-angular profile.

Figs. 2A and 2B are two-dimensional schematic diagrams illustrating examples of finite element models (solid models) of the vicinity of a weld part (the as-welded part and the finished weld part) of finite element models for a bogie frame (bogie frame cross-section) employed in stress evaluation methods according to a comparative example and according to the present exemplary embodiment. Fig. 2A illustrates a finite element model for the vicinity of the as-welded part employed in the stress evaluation method of the comparative example, and Fig. 2B illustrates a finite element model for the vicinity of the finished weld part employed in the stress evaluation method of the present exemplary embodiment. Figs. 2A and 2B illustrate examples of cases in which the weld part is formed between members configuring a cruciform welded joint. Note that although there would actually be welds formed at four locations in a cruciform welded joint, a weld part formed at only a single location is illustrated in Figs. 2A and 2B for ease of explanation.

As illustrated in Fig. 2A, in the stress evaluation method of the comparative example, a cruciform welded joint 100' is configured by members 1, 2a, and 2b, and by as-welded parts 3 formed between the member 1 and the member 2a and between the member 1 and the member 2b (in Fig. 2A, only the as-welded part 3 at one location is illustrated from out of the as-welded parts 3 formed at two locations between the member 1 and the member 2a). The cross-section of the as-welded part 3 is modeled by a triangular shape. In this case, as described above, weld toes 32a, 32b of the as-welded part 3 have angular profiles (profiles that include a geometrical singularity (angle point) where a tangent is not able to be set). Namely, the weld toe 32a is a portion where an edge 11 of the member 1 intersects an edge 31 of the as-welded part 3. However, the straight edge 11 intersects the straight edge 31 with a fold-line shape, resulting in the intersection point being an angle point. Similar also applies in the case of the weld toe 32b. As described above, in cases in which a finite element model is employed in which the as-welded part 3 is modeled such that the weld toes 32a, 32b have angular profiles, the stress arising at the weld toes 32a, 32b is unable to be computed with good precision even if, for example, a fine mesh is set in the finite element model due to the computation result being heavily dependent on the mesh size.

By contrast, in the first process S1 of the stress evaluation method according to the present exemplary embodiment, a finite element model is built that includes a finished weld part resulting from finishing the as-welded part 3 such that the weld toes 32a, 32b of the as-welded part 3 illustrated in Fig. 2A become a smooth, non-angular profile (a profile configured by points where a tangent can be set). Namely, as illustrated in Fig. 2B, the finite element model of the cruciform welded joint 100 built in the first process S1 of the stress evaluation method according to the present exemplary embodiment is configured by the members 1, 2a, and 2b, by finished weld parts 4 formed between the member 1 and the member 2a and between the member 1 and the member 2b (in Fig. 2B, only the finished weld part 4 at one location is illustrated from out of the finished weld parts 4 formed at two locations between the member 1 and the member 2a), and by weld toes 42a, 42b of the finished weld parts 4 having smooth, non-angular profiles. Specifically, in the example illustrated in Fig. 2B, the weld toes 42a, 42b of the finished weld part 4 are each modeled by a circular arc shape that is concave on the outside of the cross-section external profile and that has a predetermined radius of curvature (for example a radius of curvature of approximately 3 mm to 10 mm).

Although the example illustrated in Fig. 2B illustrates a finite element model for the cruciform welded joint 100, similar applies to a T-shaped welded joint or an angle joint in which a weld toe of the finished weld part is modeled with a circular arc shape that is concave on the outside of the cross-section external profile, enabling a smooth, non-angular profile to be achieved for the weld toe of the finished weld part.

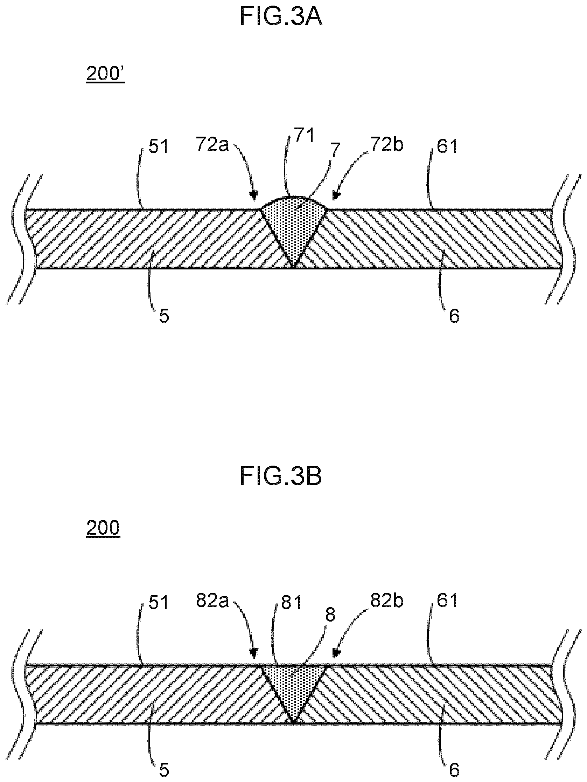

Figs. 3A and 3B are two-dimensional schematic diagrams illustrating additional examples of finite element models (solid models) of the vicinity of a weld part (an as-welded part and a finished weld part) of finite element models for a bogie frame (bogie frame cross-section) employed in stress evaluation methods according to a comparative example and according to the present exemplary embodiment. Fig. 3A illustrates a finite element model of a vicinity of the as-welded part employed in the stress evaluation method of the comparative example, and Fig. 3B illustrates a finite element model of the vicinity of the finished weld part employed in the stress evaluation method of the present exemplary embodiment. Figs. 3A and 3B illustrate examples of cases in which the weld part is formed between members configuring a butt welded joint.

As illustrated in Fig. 3A, in the stress evaluation method of the comparative example, a butt welded joint 200' is configured by members 5 and 6, and by an as-welded part 7 formed between the member 5 and the member 6. The cross-section of the as-welded part 7 is modeled by a fan shape. In this case, weld toes 72a, 72b of the as-welded part 7 have angular profiles. Namely, the weld toe 72a is a portion where an edge 51 of the member 5 intersects a circular arc shaped edge 71 of the as-welded part 3. However, this intersection point configures an angle point due to the edge 51 and the edge 71 intersecting with a fold-line shape. Similar also applies in the case of the weld toe 72b. Similarly to in the case illustrated in Fig. 2A, in cases in which a finite element model is employed in which the as-welded part 7 is modeled such that the weld toes 72a, 72b have angular profiles, the stress arising at the weld toes 72a, 72b is unable to be computed with good precision even if, for example, a fine mesh is set in the finite element model due to the computation result being heavily dependent on the mesh size.

By contrast, in the first process S1 of the stress evaluation method according to the present exemplary embodiment, a finite element model is built to include a finished weld part resulting from finishing the as-welded part 7 illustrated in Fig. 3A such that the weld toes 72a, 72b of the as-welded part 7 become a smooth, non-angular profile. Namely, as illustrated in Fig. 3B, the finite element model for the butt welded joint 200, which is built in the first process S1 of the stress evaluation method according to the present exemplary embodiment, is configured by the members 5, 6, by a finished weld part 8 formed between the member 5 and the member 6, and by weld toes 82a, 82b of the finished weld part 8 that have smooth, non-angular profiles. Specifically, in the example illustrated in Fig. 3B, the finished weld part 8 is modeled such that an edge 81 of the finished weld part 8 is positioned on a common straight line of an edge 51 of the member 5 and an edge 61 of the member 6. The weld toes 82a, 82b of the finished weld part 8 are thus formed with smooth, non-angular profiles.

Note that a 5 mm gauge is employed as a strain gauge when measuring actual stress in a bogie (JIS E4208), and to align with this the mesh size (inter-node distance) of the finite element model built at the first process S1 of the stress evaluation method according to the present exemplary embodiment is also preferably approximately 5 mm. An even finer mesh size may be applied to locations having a small radius of curvature, such as the weld toes, with finer mesh size appropriate to the profile thereat.

Second Process S2

In the second process S2, stress arising at the weld toe of the finished weld part is computed by executing finite element analysis using the finite element model built in the first process S1. In the example illustrated in Fig. 2B, stress (the maximum stress) arising at the weld toes 42a, 42b of the finished weld part 4 is computed.

Note that detailed explanation regarding specific content of the finite element analysis executed in the second process S2 is omitted since a known finite element analysis method is applicable therefor.

As described above, in the stress evaluation method according to the present exemplary embodiment, a finite element model built by the first process S1 is a model of a bogie frame including a finished weld part resulting from finishing an as-welded part such that the weld toe becomes a smooth, non-angular profile. This finite element model is then employed to execute finite element analysis in the second process S2, thereby enabling the stress arising at the weld toe of the finished weld part to be computed with good precision.

Third Process S3

In the third process S3, the nominal stress of the as-welded part is computed using the stress computed in the second process S2 (the stress arising at the weld toe of the finished weld part) and using the fatigue notch factor or the stress concentration factor of the weld toe of the finished weld part as pre-measured in the preparation process S0.

Specifically, in the third process S3 a nominal stress $\sigma_n$ of the as-welded part is computed using Equation (5) below, wherein $\sigma_1$ is the stress computed in the second process S2, $\beta_g$ is a fatigue notch factor of the weld toe of the finished weld part, and $\sigma_n$ is the nominal stress of the as-welded part.

$$\sigma_n = \sigma_1 \,/\, \beta_g \qquad (5)$$

Note that although the nominal stress of the finished weld part is computed directly using Equation (5), the nominal stress of the finished weld part is also equivalent to the nominal stress of the as-welded part. Accordingly, computing the nominal stress of the finished weld part using Equation (5), and then taking this computed nominal stress of the finished weld part as the nominal stress of the as-welded part enables the nominal stress of the as-welded part to be computed.

This similarly applies to cases in which the stress concentration factor is employed, and the nominal stress $\sigma_n$ of the finished weld part can be computed by substituting the value of the pre-measured stress concentration coefficient for the fatigue notch factor $\beta_g$ in Equation (5). Note that as long as a conservative approach is made from a safety perspective when determining whether or not to finish the as-welded part, the value of the fatigue notch factor $\beta_g$ or the stress concentration factor employed to compute the nominal stress $\sigma_n$ is settable to 1 without carrying out actual measurements.

Fourth Process S4

In the fourth process S4, the stress arising at the weld toe of the as-welded part is computed using the nominal stress $\sigma_n$ of the as-welded part obtained in the third process S3 and using the fatigue notch factor of the weld toe of the as-welded part pre-measured in the preparation process S0.

Specifically, a stress $\sigma_2$ arising at the weld toe of the as-welded part is computed in the fourth process S4 using Equation (6) below, wherein $\beta_a$ is the fatigue notch factor of the weld toe of the as-welded part and $\sigma_2$ is the stress arising at the weld toe of the as-welded part:

$$\sigma_2 = \sigma_n \times \beta_a \qquad (6)$$

Executing the third process S3 and the fourth process S4 as described above enables the stress $\sigma_2$ arising at the weld toe of the as-welded part to be computed with good precision from the stress $\sigma_1$ computed in the second process S2. Moreover in cases in which, for example, the computed stress $\sigma_2$ arising at the weld toe of the as-welded part exceeds a maximum permitted stress value, then evaluation can be made that the as-welded part needs to be finished using a grinder as per a traditional manufacturing processes. However, in cases in which the computed stress $\sigma_2$ does not exceed the maximum permitted stress value, then this can be evaluated as meaning that the process of finishing can be omitted.

As described above, the stress evaluation method according to the present exemplary embodiment enables evaluation with good accuracy of stress arising at the weld toe of the as-welded part formed between members configuring a bogie frame of a railway vehicle by accurately reflecting the cross-section profile of the weld part, and also enables the omission of a process of finite element analysis using a model of the as-welded part with a weld toe simulated by an angle point.

Preparation Process S0

In the preparation process S0, the fatigue notch factor $\beta_a$ is measured for the weld toe of the as-welded part for employing in the fourth process S4. Specifically, a first test piece provided with a weld part corresponding to the as-welded part on an actual bogie frame is prepared, and the fatigue notch factor $\beta_a$ is measured by subjecting this first test piece to fatigue testing.

Moreover, in the preparation process S0, in cases in which the fatigue notch factor $\beta_g$ of the weld toe of the finished weld part is employed in the third process S3, this fatigue notch factor $\beta_g$ is also measured. Specifically, a second test piece provided with a weld part corresponding to the finished weld part on an actual bogie frame is prepared, and the fatigue notch factor $\beta_g$ is measured by subjecting this second test piece to fatigue testing. Note that in cases in which the stress concentration factor of the weld toe of the finished weld part is employed in the third process S3, the stress concentration factor is measured by executing a static load test using the second sample.

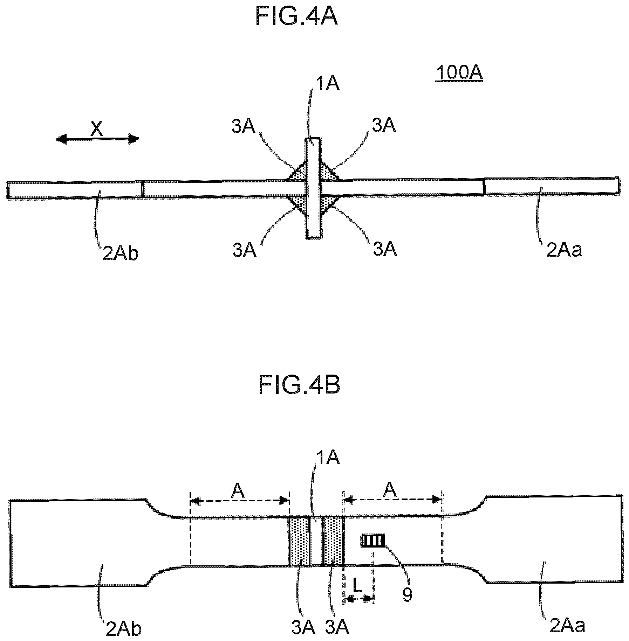

Figs. 4A and 4B are schematic diagrams illustrating an example of the first test piece provided with a weld part corresponding to the as-welded part of an actual bogie frame. Fig. 4A is a front view, and Fig. 4B is a plan view. A first test piece 100A illustrated in Figs. 4A and 4B is an example of a test piece prepared in a case in which the as-welded part of an actual bogie frame is formed between members configuring a cruciform welded joint. Note that although weld parts 3A are illustrated with triangular profiles in Figs. 4A and 4B for ease of explanation, the weld parts 3A do not have simple triangular profiles and actually have complex profiles.

As illustrated in Figs. 4A and 4B, similarly to a cruciform welded joint of an actual bogie frame, the first test piece 100A has the form of a cruciform welded joint configured by members 1A, 2Aa, and 2Ab, and by the weld parts 3A formed between the member 1A and the member 2A and between the member 1A and the member 2Ab. The first test piece 100A is provided with the weld parts 3A formed under equivalent welding conditions to those employed when forming as-welded parts on an actual bogie frame, without finishing. Specifically, the weld parts 3A provided to the first test piece 100A are formed using the same welding method, welding materials, welding current, and the like as those employed when forming the as-welded parts on an actual bogie frame. The materials employed for the members 1A, 2Aa, 2Ab to be joined by the weld parts 3A provided to the first test piece 100A are the same as the materials employed of the members joined by the as-welded parts on an actual bogie frame.

Note that although not illustrated in the drawings, a second test piece provided with weld parts corresponding to the finished weld parts of an actual bogie frame also has a similar structure to that of the first test piece 100A illustrated in Figs. 4A and 4B. The weld parts provided to the second test piece are finished under equivalent conditions to those when finishing a finished weld part on an actual bogie frame by finishing a weld part formed under welding conditions equivalent to those when forming an as-welded part on an actual bogie frame. Specifically, for example, in cases in which the weld toes of finished weld parts of an actual bogie frame have a circular arc shape that is concave on the outside of the cross-section external profile with a concave predetermined radius of curvature, the weld parts provided to the second test piece are also finished in circular arc shapes having the same radius of curvature.

In cases in which the fatigue notch factor $\beta_g$ of the weld toe of the finished weld part is employed in the third process S3, fatigue testing is executed in the preparation process S0 using the first test piece 100A and the second test piece to measure the fatigue notch factor

$\beta_a$ and the fatigue notch factor $\beta_g$.

Specifically, the first test piece 100A is attached to a fatigue tester, a strain gauge is affixed to weld toes of the weld parts 3A, and strain is measured while fatigue testing is executed by repeatedly applying load in a length direction of the first test piece 100A (the direction indicated by the arrow X in Fig. 4A). The measured strain is then converted into stress by multiplying by the Young's modulus as determined by the materials employed for the members 1A, 2Aa, 2Ab. Moreover, the nominal stress is computed by dividing the load applied during the fatigue testing by the cross-sectional area of the first test piece 100A (the cross-sectional area in the region A having a substantially uniform cross-sectional area in Fig. 4B). Moreover, as illustrated in Fig. 4B, stress computed by affixing a strain gauge 9 to a width direction central position of the first test piece 100A at a location separated by a predetermined distance L (L = 20 mm to 30 mm) from the toe of the weld parts 3A may also be taken as the nominal stress. The fatigue notch factor $\beta_a$ is then computed from a ratio of this nominal stress and the stress computed by affixing the strain gauge as described above. The fatigue notch factor $\beta_g$ is computable in a similar manner using the second test piece.

In cases in which the stress concentration factor of the weld toe of the finished weld part is employed in the third process S3, instead of performing the fatigue testing for cases in which the fatigue notch factor $\beta_g$ is measured, the stress concentration factor may be measured by executing static load testing with the second test piece in the preparation process S0.

In cases in which the weld part (finished weld part) provided to the second test piece is finished to a circular arc shape with a radius of curvature of approximately 10 mm, this results in the stress concentration factor of the weld toe of the finished weld part being less, and the fatigue notch factor $\beta_g$ becomes a value equivalent to this stress concentration factor.

Note that although the foregoing explanation is regarding an example of a procedure to compute the fatigue notch factor $\beta_a$ and the fatigue notch factor $\beta_g$ (or the stress concentration factor) are computed in terms of stress, stress is the product of strain and the Young's modulus, and so the fatigue notch factor $\beta_a$ and the fatigue notch factor $\beta_g$ (or the stress concentration factor) are computable in terms of strain resulting from dividing the stress by the Young's modulus.

Note that permitted stress $\sigma_a$ of the weld toe of the as-welded part and permitted stress $\sigma_g$ of the weld toe of the finished weld part for employing in the contour display generation process S5, described later, are preferably computed in the preparation process S0. Specifically, the permitted stress $\sigma_a$ of the weld toe of the as-welded part is computable by subjecting the first test piece 100A to fatigue testing. Similarly, the permitted stress $\sigma_g$ of the weld toe of the finished weld part is computable by subjecting the second test piece to fatigue testing.

Note that the present invention is not limited to this approach, and the permitted stress $\sigma_a$ and the permitted stress $\sigma_g$ may be set to predetermined constant values.

Contour Display Generation Process S5

In the contour display generation process S5, as described above, a contour display is generated in which values of a safety factor $Z_g$ of the weld toe of the finished weld part as expressed by the following Equation (1) are represented using color or grayscale, wherein $\sigma_1$ is the stress arising at the weld toe of the finished weld part computed in the second process S2, $\sigma_2$ is the stress arising at the weld toe of the as-welded part computed in the fourth process S4, $\sigma_g$ is the permitted stress of the weld toe of the finished weld part, and $\sigma_a$ is the permitted stress of the weld toe of the as-welded part.

In the contour display generation process S5, Equation (4) for a threshold safety factor $Z_{g,\,th}$ for the safety factor $Z_g$ is derived by setting 1 as a safety factor $Z_a$ of the weld toe of the as-welded part in Equation (3), and a contour display is generated with the values of the threshold safety factor $Z_{g,\,th}$ obtained by Equation (4) employed for color or grayscale boundaries.

$$Z_g = \sigma_g \,/\, \sigma_1 \qquad (1)$$

$$Z_a = Z_g \cdot (\sigma_a \,/\, \sigma_g) \,/\, (\sigma_2 \,/\, \sigma_1) \qquad (3)$$

$$Z_{g,\,th} = (\sigma_2 \,/\, \sigma_1) \,/\, (\sigma_a \,/\, \sigma_g) \qquad (4)$$

In the contour display generation process S5 described above, the color or grayscale of the contour display differs between cases in which the value of the safety factor $Z_g$ computed by Equation (1) is equal to or greater than the threshold safety factor expressed by Equation (4), and cases in which the value of the safety factor $Z_g$ is less than this threshold safety factor. Accordingly, easy evaluation of whether or not there is a need to finish the as-welded part can be performed simply by looking at the generated contour display.

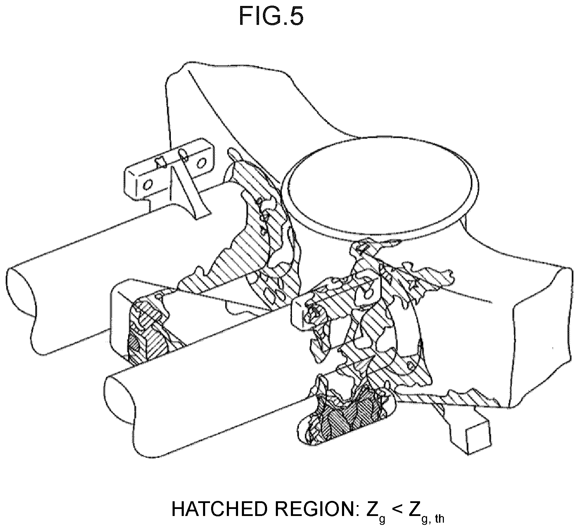

Fig. 5 is a diagram illustrating an example of the contour display generated in the contour display generation process S5. Hatching is not applied to regions in the contour display illustrated in Fig. 5 where the value of the safety factor $Z_g$ computed using Equation (1) is equal to or greater than the threshold safety factor expressed by Equation (4) (and so appears white). However, hatching is applied to regions where the value of the safety factor $Z_g$ is less than the threshold safety factor, and so the grayscale appears darker. Namely, the hatched regions in Fig. 5 indicate where $Z_g$ is less than $Z_{g,\,th}$. Note that in the example illustrated in Fig. 5, the type of hatching applied is varied for regions below the same threshold safety factor according to the value of the safety factor $Z_g$.

Easy evaluation of whether or not as-welded parts need finishing is accordingly simply performed by looking at the contour display illustrated in Fig. 5, with regions not applied with hatching indicating that the as-welded part does not need finishing, and regions applied with hatching indicating that the as-welded part does need finishing.

**Claims**

1.  A railway vehicle bogie frame as-welded part stress evaluation method, which is a method to evaluate stress arising at a weld toe of an as-welded part formed between members configuring a bogie frame of a railway vehicle, the method comprising:

    a first process of building a finite element model using a solid model of the bogie frame that includes a finished weld part resulting from finishing the as-welded part such that the weld toe becomes a smooth, non-angular profile;
    a second process of executing finite element analysis employing the finite element model built in the first process so at to compute stress arising at the weld toe of the finished weld part;
    a third process of employing the stress computed in the second process and a pre-measured fatigue notch factor or a pre-measured stress concentration factor of the weld toe of the finished weld part, computing a nominal stress of the finished weld part, and taking the nominal stress of the finished weld part as a nominal stress of the as-welded part; and
    a fourth process of employing the nominal stress of the as-welded part obtained in the third process and a pre-measured fatigue notch factor of the weld toe of the as-welded part, and computing stress arising at the weld toe of the as-welded part.

2.  The railway vehicle bogie frame as-welded part stress evaluation method of claim 1, wherein:

    in a case in which the fatigue notch factor of the weld toe of the finished weld part is employed in the third process, the fatigue notch factor is measured by executing fatigue testing using a test piece provided with a weld part corresponding to the finished weld part;
    in a case in which the stress concentration factor of the weld toe of the finished weld part is employed in the third process, the stress concentration factor is measured by executing static load testing using a test piece provided with a weld corresponding to the finished weld part;

and

the fatigue notch factor of the weld toe of the as-welded part employed in the fourth process is measured by executing fatigue testing using a test piece provided with a weld part corresponding to the as-welded part.

3. The railway vehicle bogie frame as-welded part stress evaluation method of claim 1 or claim 2, wherein:

the as-welded part is formed between members configuring a cruciform welded joint, a T-shaped welded joint, or an angle joint; and the weld toe of the finished weld part has a circular arc shape that is concave on the outside of a cross-section external profile of the finished weld part.

4. The railway vehicle bogie frame as-welded part stress evaluation method of any one of claim 1 to claim 3, further comprising:

a contour display generation process of generating a contour display in which values of a safety factor $Z_g$ of the weld toe of the finished weld part as expressed by Equation (1) below are represented using color or grayscale, wherein $\sigma_1$ is a stress arising at the weld toe of the finished weld part computed in the second process, $\sigma_2$ is a stress arising at the weld toe of the as-welded part computed in the fourth process S4, $\sigma_g$ is a permitted stress of the weld toe of the finished weld part, and $\sigma_a$ is a permitted stress of the weld toe of the as-welded part; wherein, in the contour display generation process, Equation (4) is used to derive a threshold safety factor $Z_{g,\,th}$ for values of the safety factor $Z_g$ with 1 used to represent a safety factor $Z_a$ of the weld toe of the as-welded part as expressed by Equation (3), and a contour display is generated using a value of the threshold safety factor $Z_{g,\,th}$ obtained by Equation (4) as a color or grayscale boundary:

$$Z_g = \sigma_g \, / \, \sigma_1 \qquad\qquad (1)$$

$$Z_a = Z_g \cdot (\sigma_a \, / \, \sigma_g) \, / \, (\sigma_2 \, / \, \sigma_1) \qquad (3)$$

$$Z_{g,\,th} = (\sigma_2 \, / \, \sigma_1) \, / \, (\sigma_a \, / \, \sigma_g) \qquad (4).$$

# FIG.1

START

PREPARATION PROCESS:
· MEASURE FATIGUE NOTCH FACTOR OF WELD TOE OF AS-WELDED PART
· MEASURE FATIGUE NOTCH FACTOR OR STRESS CONCENTRATION FACTOR OF WELD TOE OF FINISHED WELD PART — S0

FIRST PROCESS:
BUILD FINITE ELEMENT MODEL OF BOGIE FRAME INCLUDING FINISHED WELD PART — S1

SECOND PROCESS:
EXECUTE FINITE ELEMENT ANALYSIS AND COMPUTE STRESS ARISING IN WELD TOE OF FINISHED WELD PART — S2

THIRD PROCESS:
EMPLOY STRESS COMPUTED IN SECOND PROCESS AND FATIGUE NOTCH FACTOR OR STRESS CONCENTRATION FACTOR OF WELD TOE OF FINISHED WELD PART, AND COMPUTE NOMINAL STRESS OF AS-WELDED PART — S3

FOURTH PROCESS:
EMPLOY NOMINAL STRESS COMPUTED IN THIRD PROCESS AND FATIGUE NOTCH FACTOR OF WELD TOE OF AS-WELDED PART, AND COMPUTE STRESS ARISING IN WELD TOE OF AS-WELDED WELD PART — S4

CONTOUR DISPLAY GENERATION PROCESS:
GENERATE CONTOUR DISPLAY IN WHICH VALUES OF SAFETY FACTOR OF WELD TOE OF FINISHED WELD PART ARE REPRESENTED BY COLOR OR GRAYSCALE — S5

END

## FIG.2A

## FIG.2B

# FIG.3A

200'

# FIG.3B

200

# FIG.4A

# FIG.4B

# FIG.5

HATCHED REGION: $Z_g < Z_{g, th}$

<table>
<tr><td colspan="2" align="center"><strong>INTERNATIONAL SEARCH REPORT</strong></td><td>International application No.<br>PCT/JP2019/046555</td></tr>
</table>

**A. CLASSIFICATION OF SUBJECT MATTER**
Int.Cl. B61F5/52(2006.01)i, G01L1/00(2006.01)i, B23K31/00(2006.01)i,
G06F30/23(2020.01)i
FI: G01L1/00M, B23K31/00Z, B61F5/52, G06F17/50612H
According to International Patent Classification (IPC) or to both national classification and IPC

**B. FIELDS SEARCHED**

Minimum documentation searched (classification system followed by classification symbols)
Int.Cl. G01L1/00-G01L27/02, G01N1/00-G01N19/10, G01M1/00-G01M99/00,
B61F5/00-B61F5/52, B23K31/00, G06F30/23

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2003-149091 A (HITACHI CONSTRUCTION MACHINERY CO., LTD.) 21.05.2003 (2003-05-21), paragraphs [0002]-[0030], fig. 1-17 | 1-4 |
| A | JP 2005-190242 A (SUMITOMO METAL INDUSTRIES, LTD.) 14.07.2005 (2005-07-14), paragraphs [0013]-[0032], fig. 1-11 | 1-4 |
| A | JP 2012-184996 A (MITSUI ENG & SHIPBUILD CO., LTD.) 27.09.2012 (2012-09-27), paragraphs [0035]-[0126], fig. 1-23 | 1-4 |
| A | US 2012/0259593 A1 (EL-ZEIN, M. S.) 11.10.2012 (2012-10-11), paragraphs [0039]-[0074], fig. 1-26 | 1-4 |

☐ Further documents are listed in the continuation of Box C.     ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>03.02.2020 | Date of mailing of the international search report<br>18.02.2020 |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

INTERNATIONAL SEARCH REPORT
Information on patent family members

| International application No. |
|---|
| PCT/JP2019/046555 |

```
JP 2003-149091 A    21.05.2003    (Family: none)

JP 2005-190242 A    14.07.2005    (Family: none)

JP 2012-184996 A    27.09.2012    (Family: none)

US 2012/0259593 A1 11.10.2012    (Family: none)
```

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016068593 A
- JP 2003149091 A
- JP 2005190242 A